# EUROPEAN PATENT SPECIFICATION

(11) **EP 4 616 061 B1**
(45) Date of publication and mention of the grant of the patent: **12.08.2026**
(21) Application number: 22817292.0
(22) Date of filing: 10.11.2022
(51) Int. Cl.: F02D 19/06, C02F 11/04, F02D 19/08, F02M 21/02

(54) **A FUEL MIXTURE FOR OPERATING AN INTERNAL COMBUSTION ENGINE**
KRAFTSTOFFGEMISCH ZUM BETRIEB EINES VERBRENNUNGSMOTORS
MÉLANGE DE CARBURANT POUR FAIRE FONCTIONNER UN MOTEUR À COMBUSTION INTERNE

(43) Date of publication of application: 17.09.2025
(73) Proprietor: Wärtsilä Finland Oy, 65170 Vaasa (FI)
(72) Inventor: LAGUS, Olai, 65170 Vaasa (FI)
(74) Representative: Berggren Oy
(86) International application number: PCT/FI2022/050744
(87) International publication number: WO 2024/100318

(56) References cited:
- BUI VAN GA ET AL: "Optimizing operation parameters of a spark-ignition engine fueled with biogas-hydrogen blend integrated into biomass-solar hybrid renewable energy system", ENERGY, ELSEVIER, AMSTERDAM, NL, vol. 252, 18 April 2022 (2022-04-18), XP087067600, ISSN: 0360-5442, [retrieved on 20220418], DOI: 10.1016/J.ENERGY.2022.124052
- XIN ZHANG ET AL: "The experimental study on cyclic variation in a spark ignited engine fueled with biogas and hydrogen blends", INTERNATIONAL JOURNAL OF HYDROGEN ENERGY, ELSEVIER, AMSTERDAM, NL, vol. 38, no. 25, 14 February 2013 (2013-02-14), pages 11164 - 11168, XP028687460, ISSN: 0360-3199, DOI: 10.1016/J.IJHYDENE.2013.01.097
- CHEOLWOONG PARK ET AL: "Performance and emission characteristics of a SI engine fueled by low calorific biogas blended with hydrogen", INTERNATIONAL JOURNAL OF HYDROGEN ENERGY, ELSEVIER, AMSTERDAM, NL, vol. 36, no. 16, 3 May 2011 (2011-05-03), pages 10080 - 10088, XP028248308, ISSN: 0360-3199, [retrieved on 20110517], DOI: 10.1016/J.IJHYDENE.2011.05.018
- HU ZHUNQING ET AL: "Experimental study on performance and emissions of engine fueled with lower heat value gashydrogen mixtures", INTERNATIONAL JOURNAL OF HYDROGEN ENERGY, ELSEVIER, AMSTERDAM, NL, vol. 37, no. 1, 15 February 2011 (2011-02-15), pages 1080 - 1083, XP028348579, ISSN: 0360-3199, [retrieved on 20110223], DOI: 10.1016/J.IJHYDENE.2011.02.088
- ZHANG XIN ET AL: "Experimental Research on low calorific value gas blended with hydrogen engine", ENERGY PROCEDIA, vol. 158, 22 August 2018 (2018-08-22), pages 459 - 464, XP085634260, ISSN: 1876-6102, DOI: 10.1016/J.EGYPRO.2019.01.133

## Description

### Technical field

This specification relates to a method of operating an internal combustion engine and a gas engine.

### Background

Hydrogen is a clean fuel that can be produced from a variety of resources. These qualities make it an attractive fuel for transportation and electricity generation applications.

High reactivity of hydrogen causing self-ignition and quick combustion poses challenges for use of hydrogen as a fuel in gas engines. One specific problem limiting the use of hydrogen as a fuel in gas engines is pre-ignition (also referred to as auto-ignition or self-ignition). Pre-ignition is a phenomenon causing knocking type of high local pressure rise wherein hydrogen fuel starts to locally react or self-ignites already before arrival of ignition (spark) triggered flame front.

Pre-ignition knocking should not be mixed with detonation knocking which is rather common phenomenon particularly in gasoline engines. Detonation knocking occurs typically after a spark plug has initiated the ignition event of the fuel mixture and results from one or more pockets of fuel mixture exploding outside the envelope of the normal combustion or flame front.

Detonation knocking can be mitigated by adjusting time of ignition, typically by retarding the ignition. This will lower the combustion temperatures and this effect carries over from previous power cycle to the following power cycles thus lowering detonation knocking tendency. In mitigation of pre-ignition knocking advancing or retarding the timing of ignition is not sufficient because the hydrogen fuel auto-ignites based on different phenomenon and more randomly. Therefore, there is a need for efficient means to mitigate the pre-ignition knocking in gas engines utilizing hydrogen fuel.

XIN ZHANG ET AL: "The experimental study on cyclic variation in a spark ignited engine fueled with biogas and hydrogen blends", INTERNATIONAL JOURNAL OF HYDROGEN ENERGY, ELSEVIER, AMSTERDAM, NL, vol. 38, no. 25, 14 February 2013 (2013-02-14), pages 11164-11168, XP028687460, ISSN: 0360-3199, DOI: 10.1016/ J.IJHYDENE.2013.01.097 discloses a method of operating a spark-ignited internal combustion engine using a fuel mixture of biogas (comprising CO₂ and methane) and hydrogen, with at least 25% hydrogen by volume. The study investigates the effects of varying hydrogen content and a fixed CO₂ fraction (50%) on combustion stability and engine performance. The present invention differs in that it measures the CO₂ content of the biogas and adjusts the proportion of hydrogen in the fuel mixture based on the measured CO₂ content, such that a higher CO₂ content results in a higher hydrogen proportion before supplying the mixture to the combustion chamber.

### Summary

A method according to claim 1 and a gas engine according to claim 7 are provided. The method comprises supplying a fuel mixture comprising CO_2, methane and at least 25 vol.% of hydrogen into a combustion chamber of the internal combustion engine.

A fuel mixture is provided with which the abnormal burning events caused by the rapid combustion and/or self-ignition of hydrogen can be avoided. The fuel mixture comprises inert CO₂ molecules for hindering the flame from propagating further in the gas in case some hydrogen molecules get ignited at a too early phase. Utilization of biogas taken from an early phase of biogas purification as the CO₂ source provides cost and energy savings, as well as widens the range of possibilities for biogas use.

According to an embodiment, a fuel mixture for operating an internal combustion engine is provided. The fuel mixture comprises CO₂, methane and at least 25 vol.% of hydrogen.

According to another embodiment, a method of producing a fuel mixture for operating an internal combustion engine is provided. The method comprises blending CO₂, methane and hydrogen so as to provide a fuel mixture comprising CO₂, methane and at least 25 vol.% of hydrogen.

Further, use of the fuel mixture as disclosed herein for operating an internal combustion engine is provided.

### Detailed description

The solution is described in the following in more detail with reference to some embodiments, which shall not be regarded as limiting.

Hydrogen is a zero-carbon fuel burned with oxygen, provided that it is created in a process that does not involve carbon. Hydrogen fuel can be produced from methane or by electrolysis of water. So-called green hydrogen is produced entirely from renewable sources. In flame of pure hydrogen burning in air, the hydrogen reacts with oxygen to form water with the release of energy according to equation 1:

2H₂ (g) + O₂ (g) → 2H₂O (g) + energy (1)

The energy released allows hydrogen to be used as a fuel. Hydrogen can be used in much the same way as natural gas. It can be delivered to fuel cells to generate electricity and heat, used in a combined gas turbine to produce larger quantities of centrally produced electricity or burned to run a combustion engine. Hydrogen is considered as the primary sustainable source of renewable energy. Hydrogen combustion produces no objectionable emissions other than trace amounts of nitrogen oxides that form when residual nitrogen and oxygen in air are heated in the combustion process.

Hydrogen has a wide flammability range and high burning velocity for combustion in a spark-ignition engine. The wide flammability range provides smooth engine operation at a very lean mixture. However, the extremely rapid combustion of hydrogen at higher loads caused by its high reactivity is responsible for causing abnormal burning seen for example as knocking, pre-ignition and backfiring. This abnormal burning reduces the engine reliability and limits the engine power.

Gas fuels have different combustion properties which correlate to the knock tendency or knock resistance of that gas during combustion in an engine. A methane number is an index number for classifying gaseous fuels according to their knock resistance. Methane gas has a high knock resistance (low knock tendency) and has a methane number of 100. Hydrogen gas has a low knock resistance (high knock tendency) and has a methane number of 0.

The hydrogen knock phenomenon has a dual nature. The first cause of the hydrogen knock is the spontaneous combustion of hydrogen as a result of the excessively elevated temperature and pressure at the end of the power stroke.

The second mechanism of hydrogen knock generation is the so-called light knock, whose cause is believed to be the unstable combustion process initiated by the spark plug. The latter one is not as harmful to the engine as the heavy knock, but being an undesirable phenomenon, it is important to improve the control of the combustion process in the area of its occurrence.

Previously, exhaust gas recirculation (EGR) has been suggested to specifically influence charge and knocking tendency in combustion chambers fed with fluctuating fuel qualities operated in particular with natural gas or biogas. Due to high proportion of inert gas, exhaust gas recirculation has been disclosed to have a knock-inhibiting effect by rendering the charge in the combust chamber inert, thereby slowing down the combustion. However, by using such an approach all components, also the undesired ones, contained by the exhaust gas end up in the combustion chamber. Further, this approach complicates the engine system. EGR also usually decreases the overall efficiency of the engine.

Approach disclosed herein is relying on providing a fuel mixture with which the abnormal burning events caused by the rapid combustion of hydrogen can be avoided. The fuel mixture comprises inert molecules that may hinder the flame from propagating further in the gas in case some hydrogen molecules get ignited at a too early phase. Particularly, the solution disclosed herein aims at mitigating the pre-ignition knocking caused by the hydrogen self-ignition.

It is preferable that the inert screening molecules have large enough size and also stiff enough molecular structure for efficient screening of the surroundings of hydrogen molecules from a flame caused by self-ignition in the cylinder. Carbon dioxide (CO₂) and nitrogen (N₂) are examples of such molecules. CO₂ molecule has a carbon atom covalently double bonded to two oxygen atoms. The symmetry of the CO₂ molecule is linear and centrosymmetric at its equilibrium geometry. Since being centrosymmetric, the molecule has no electric dipole moment. CO₂ having a larger size (about 0.33 nm) than N₂ (0.3 nm) may be more efficient for screening.

Also an increase in the lambda value (air-to-fuel ratio) may be of help when trying to prevent self-ignition of hydrogen. With the higher concentration of air also a higher concentration of inert nitrogen as part of the air is supplied. The inert N₂ molecules are non-reactive and stable and can have a positive effect on screening the propagation of a flame caused by self-ignition of hydrogen. Lean mixture also contributes to a decrease in the speed of flame propagation, thus reducing the risk of hydrogen knocking.

A fuel mixture for operating an internal combustion engine is provided. The fuel mixture comprises CO₂, methane and at least 25 vol.% of hydrogen. Preferably the fuel mixture consists essentially of CO₂, methane and hydrogen, the amount of hydrogen being at least 25 vol.%.

The CO₂ and methane originate from biogas.

When the CO₂ and methane originate from biogas and the hydrogen is green hydrogen, the fuel mixture may be referred to as a renewable fuel mixture. When the hydrogen used is non-fossil based, a non-fossil fuel mixture is provided.

Presence of CO₂ in the fuel mixture helps in avoiding the abnormal burning events, such as self-ignition caused by the high reactivity of hydrogen, thereby improving controlled combustion of hydrogen and engine reliability. According to an embodiment, the amount of the CO₂ in the fuel mixture is at most 15 vol.%. Preferably, the fuel mixture comprises from 1 to 15 vol.% of CO₂. It is beneficial to keep the amount of the CO₂ as low as possible, as CO₂ as inert molecule does not combust further and therefore its addition to the fuel does not provide energy but takes up volume. However, the amount of the CO₂ in the fuel mixture has to be such that the desired effect is achieved.

According to an embodiment, the fuel mixture comprises from 25 to 98 vol.% of hydrogen. For example, the fuel mixture may comprise from 25 to 85 vol.% of hydrogen.

The fuel mixture may comprise from 1 to 50 vol.% of methane. Preferably, the fuel mixture comprises at least 25 vol.% of hydrogen, at most 15 vol.% of CO₂, and the rest of the fuel mixture essentially consists of methane. Thus, the fuel mixture may essentially consist of hydrogen, CO₂ and methane. Term "essentially consisting of" in this regard means that at least 95 vol.%, such as 98 vol.% of total volume of the fuel mixture consists of hydrogen, CO₂ and methane.

The amounts of CO₂, methane and hydrogen in the fuel mixture may be optimized for operating the internal combustion engine at a nominal power of 80 %. Nominal power, i.e. rated power refers to the maximum power output of the internal combustion engine in normal operating conditions. According to an embodiment, the fuel mixture is optimized for operating the internal combustion engine having an engine speed ranging from 200 to 1500 rpm.

A method of producing a fuel mixture for operating an internal combustion engine is provided. The method comprises blending CO₂, methane and hydrogen so as to provide the fuel mixture as described above.

As already mentioned, CO₂ is inert and does not combust further. Thus, its addition to the fuel mixture does not provide energy but takes up volume. Therefore, in order to increase the energy content of the fuel mixture it is beneficial to blend the CO₂ into the hydrogen gas as part of a mixture that has higher volumetric energy density when compared to hydrogen.

CO₂ is provided as part of biogas. Thus, the method comprises blending biogas comprising CO₂ and methane with hydrogen so as to provide a fuel mixture comprising CO₂, methane and at least 25 vol.% of hydrogen.

Biogas refers to a gas that is produced from biodegradable organic materials via anaerobic digestion. With the help of a range of bacteria, organic matter breaks down releasing a blend of gases. Typically biogas contains from 50 to 85 vol.% methane (CH₄) and from 15 to 50 vol.% CO₂. Besides methane and CO₂, biogas may also comprise hydrogen sulfide (H₂S), ammonia (NH₃), water vapor (H₂O), methyl siloxanes, nitrogen (N₂), oxygen (O₂), volatile organic compounds (VOCs), carbon monoxide (CO) and/or hydrocarbons. The biogas composition varies depending upon the substrate composition, as well as the conditions within the anaerobic reactor (temperature, pH and substrate concentration).

According to an embodiment, the method of producing the fuel mixture further comprises producing the biogas from biodegradable organic materials via anaerobic digestion prior to blending the biogas and the hydrogen.

Conventionally, the contaminative components of the biogas are removed prior to any eventual utilization. H₂S is harmful to the environment and corrosive to metallic parts of for example engines, pumps, compressors, gas storage tanks and valves, thereby reducing their lifespan. Further, H₂S when combusted yields sulfur dioxide and sulfuric acid, also corrosive and environmentally hazardous compounds. Typically at least the amounts of CO₂ and hydrogen sulfide are to be minimized in the purification process. H₂S is removed because of its toxicity and corrosive nature, and CO₂ because of being a recalcitrant gas that reduces the density and decreases the calorific value of the biogas.

Subsequently or simultaneously with purification, the biogas is upgraded, i.e. the CO₂ content of the gas is adjusted, in order to form biomethane. Biomethane is a high-caloric gas having a methane content of close to 100 vol.%, such as from 95 to 99 vol.%. Conventional upgrading technologies relying on physical, chemical and/or biological approach are rather highly energy and chemical intensive, thus consuming energy as well as causing investment and maintenance costs.

For the method disclosed herein, the biogas is to be purified at least in order to lower the H₂S content to such a level that no corrosive effect is present. In an example, the H₂S content of the purified biogas is below 500 ppm, or even below 50 ppm. However, preferably the biogas used is not upgraded, i.e. the CO₂ content of the gas is not lowered, at least not significantly. This produces cost and energy savings in the biogas production, as it is not necessary to utilize the energy and chemical intensive upgrading technologies to the full. In certain cases it may be possible to even entirely leave out the upgrading process. CO₂ removal is the most expensive process in biogas purification and upgrading. The lesser CO₂ is removed from the raw biogas, the smaller is the cost for the production of the biogas.

H₂S removal from the raw biogas may be implemented for example by absorption utilizing a scrubbing liquid. The separation principle of absorption is based on different solubilities of various gas components in the scrubbing liquid. The scrubbing liquid may be an aqueous solution. Solubility of methane in water is 26 times lower at 25 degrees C than that of CO₂, and H₂S has even higher solubility than CO₂. Thus, H₂S can be removed prior to possible CO₂ removal, and it is even advisable because the dissolved H₂S is very corrosive and odour nuisances can cause operational problems. Alternatively to aqueous scrubbing liquid, an organic solvent may be utilized.

Thus, according to an embodiment CO₂ is provided as part of biogas, wherein the biogas has a CO₂ content of from 5 to 50 vol.%, preferably from 15 to 50 vol.%, for example from 15 to 40 vol.%.

A method of operating an internal combustion engine is provided. The method comprises supplying a fuel mixture comprising CO₂, methane and at least 25 vol.% of hydrogen into a combustion chamber of the internal combustion engine.

The fuel mixture has been provided by blending biogas comprising CO₂ and methane with the hydrogen.

The method further comprises measuring the CO₂ content of the biogas prior to supplying the biogas into the combustion chamber. Based on the CO₂ content, the proportions of the biogas and the hydrogen in the fuel mixture may be adjusted in order to efficiently exploit the CO₂ contained by the biogas in assuring the engine performance. Higher content of CO₂ in the biogas means that smaller proportion of the biogas is needed to be blended with hydrogen, thereby enabling the operation of the internal combustion engine with a fuel mixture having a higher hydrogen proportion.

According to an embodiment, the fuel mixture comprises from 25 to 98 vol.% of hydrogen and/or from 1 to 15 vol.% of CO₂ and/or from 1 to 50 vol.% of methane.

Biogas is regarded as carbon neutral because the carbon in biogas comes from organic matter that has captured the carbon from atmospheric CO₂ over relatively short timescale. Therefore, when biogas is blended into green hydrogen, a 100% renewable fuel is obtained.

It is possible to blend the biogas comprising CO₂ and methane with the hydrogen prior to supplying the fuel mixture into the combustion chamber of the internal combustion engine. Alternatively, the biogas comprising CO₂ and methane and the hydrogen may be supplied separately into the combustion chamber of the internal combustion engine.

The fuel mixture may be supplied to the main combustion chamber with intake air, via an intake valve. Alternatively, part of the fuel mixture may be supplied via a pre-combustion chamber, the remaining part being supplied via the intake valve. The fuel mixture supplied into the pre-combustion chamber is ignited therein and the burning air/fuel mixture is then allowed to spread into the main combustion chamber. Typically the pre-combustion chamber may have a volume that is from 25 to 40% of the main combustion chamber volume. Yet alternatively, the fuel mixture may be supplied utilizing a direct injection into the main combustion chamber.

Since hydrogen and biogas are completely miscible in one another and chemically non-reactive towards one another, mixtures of the two, once made, can be handled, stored, and fed into internal combustion engine as a homogeneous gas, rather than necessarily requiring two separate systems. For example, it is possible to charge an empty pressure vessel first with one gas (such as hydrogen) to a predetermined partial pressure and then continue charging to a predetermined total pressure with the other gas (such as biogas). The two gases mix together rapidly by diffusion and convection as the second gas enters the pressure vessel. Once the gases are mixed they will remain mixed indefinitely.

The internal combustion engine to be operated by the method disclosed herein is preferably a reciprocating (piston) engine. The internal combustion engine is designed as a gas engine. The internal combustion engine may be used for driving a vehicle. Alternatively, the internal combustion engine may be used as a stationary engine. The stationary engine is preferably able to be coupled or is coupled to a generator for generating electrical power.

The fuel mixture and the operating method disclosed herein are optimized for certain types of internal combustion engines, the properties of which are discussed in the following. The internal combustion engine may have an engine speed ranging from 200 to 1500 rpm. With respect to the cylinder configuration the engine can be an inline engine or a V engine, having a cylinder number from 4 to 16. The cylinder bore may range from 135 to 460 mm. The cylinder output, i.e. the output power generated by an individual cylinder may vary from 180 to 1200 kW/cyl. The rated power, i.e. the nominal power of the internal combustion engine typically ranges from 1100 to 20 000 kW, however it may be possible to operate an engine with a rated power of over 20 MW. Mean effective pressure of the engine may vary from 20 to 31 bar. Compression ratio of the engine may vary from 6:1 to 14:1. Preferably the compression ratio is from 8:1 to 12:1.

Proportion of the components of the fuel mixture disclosed herein are optimized based on the individual properties of the internal combustion engine in question.

The solution disclosed herein may be particularly advantageous for use in marine applications, as portability of hydrogen fuel poses certain challenges. The very low boiling point of H₂ (around -253 degrees C) requires use of high pressures and/or low temperatures for storage. High density storage systems are problematic due to safety concerns. Also, the high-pressure tanks weigh much more than the hydrogen they can hold. As part of the hydrogen in fuel is replaced with biogas, the method disclosed herein enables lowering the hydrogen consumption, thereby reducing the required amount of the hydrogen fuel to be carried within the marine vessel.

Presence of CO₂ in the fuel mixture provides the effect that a better overall performance of the engine is achieved when using hydrogen as the main fuel component. Also, the problems of uncontrolled self-ignition and/or knocking may be avoided.

When blending biogas with green hydrogen, a renewable fuel mixture with lower production costs as well as energy and materials consumption related to the fuel production is provided. Utilization of raw materials from an early phase of biogas purification provides cost and energy savings. As it is only necessary to remove H₂S, if present, from the raw biogas, for example the water consumption related to the biogas purification process may be diminished. Further, energy consumption for gas compression, recirculation pumps and water regeneration is diminished. Further, blending of the raw biogas with hydrogen brings about efficiency and simplification to the production of the fuel mixture, as it is not required to blend several gases, but mixing of two (biogas and hydrogen) already provides the desired product.

## Claims

1. A method of operating an internal combustion engine, the method comprising supplying a fuel mixture comprising CO₂, methane and at least 25 vol.% of hydrogen into a combustion chamber of the internal combustion engine, the CO₂ and methane originating from biogas, wherein the method further comprises measuring CO₂ content of the biogas and adjusting proportion of the hydrogen in the fuel mixture based on the CO₂ content prior to supplying the fuel mixture into the combustion chamber, such that with higher CO₂ content higher hydrogen proportion is used.

2. The method according to any of the claim 1, wherein the fuel mixture comprises at most 15 vol.% of CO₂.

3. The method according to claim 1 or 2, wherein the fuel mixture comprises
- from 25 to 98 vol.% of hydrogen and/or
- from 1 to 15 vol.% of CO₂ and/or
- from 1 to 50 vol.% of methane.

4. The method according to any of the preceding claims, wherein the internal combustion engine is used for driving a vehicle or wherein the internal combustion engine is used as a stationary engine.

5. The method according to any of the preceding claims, wherein the internal combustion engine has an engine speed ranging from 200 to 1500 rpm.

6. The method according to any of the preceding claims, wherein the method is for mitigating pre-ignition knocking in a gas engine utilizing hydrogen fuel.

7. A gas engine, the gas engine being arranged to be driven by a fuel mixture comprising CO₂, methane and at least 25 vol.% of hydrogen, the CO₂ and methane originating from biogas, wherein the gas engine comprises means for measuring CO₂ content of the biogas and means for adjusting proportion of the hydrogen in the fuel mixture based on the CO₂ content prior to supplying the fuel mixture into a combustion chamber.

8. The gas engine according to claim 7, wherein the gas engine has an engine speed ranging from 200 to 1500 rpm.

9. The gas engine according to claim 7 or 8, wherein the gas engine is an inline engine or a V engine and has a cylinder number from 4 to 16.

10. The gas engine according to any of the claims 7-9, wherein the compression ratio of the gas engine is from 8:1 to 12:1.

## Patentansprüche

1. Verfahren zum Betreiben eines Verbrennungsmotors, wobei das Verfahren das Zuführen eines Kraftstoffgemisches, das CO₂, Methan und mindestens 25 Vol.-% Wasserstoff umfasst, in einen Brennraum des Verbrennungsmotors umfasst, wobei das CO₂ und das Methan aus Biogas stammen, wobei das Verfahren ferner das Messen des CO₂-Gehalts des Biogases und das Anpassen des Anteils des Wasserstoffs in dem Kraftstoffgemisch basierend auf dem CO₂-Gehalt vor dem Zuführen des Kraftstoffgemisches in den Brennraum umfasst, sodass bei einem höheren CO₂-Gehalt ein höherer Wasserstoffanteil verwendet wird.

2. Verfahren nach einem der Ansprüche 1, wobei das Kraftstoffgemisch höchstens 15 Vol.-% CO₂ umfasst.

3. Verfahren nach Anspruch 1 oder 2, wobei das Kraftstoffgemisch Folgendes umfasst:
- 25 bis 98 Vol.-% Wasserstoff und / oder
- 1 bis 15 Vol.-% CO₂ und / oder
- 1 bis 50 Vol.-% Methan.

4. Verfahren nach einem der vorstehenden Ansprüche, wobei der Verbrennungsmotor zum Antreiben eines Fahrzeugs verwendet wird oder wobei der Verbrennungsmotor als ein ortsfester Motor verwendet wird.

5. Verfahren nach einem der vorstehenden Ansprüche, wobei der Verbrennungsmotor eine Motordrehzahl hat, die im Bereich von 200 bis 1500 U/min liegt.

6. Verfahren nach einem der vorstehenden Ansprüche, wobei das Verfahren zum Abschwächen des Vorzündungsklopfens in einem mit Wasserstoff betriebenen Gasmotor dient.

7. Gasmotor, wobei der Gasmotor so ausgelegt ist, dass er durch ein Kraftstoffgemisch angetrieben wird, das CO₂, Methan und mindestens 25 Vol.-% Wasserstoff umfasst, wobei das CO₂ und das Methan aus Biogas stammen, wobei der Gasmotor Mittel zum Messen des CO₂-Gehalts des Biogases und Mittel zum Anpassen des Wasserstoffanteils im Kraftstoffgemisch basierend auf dem CO₂-Gehalt vor dem Zuführen des Kraftstoffgemisches in einen Brennraum umfasst.

8. Gasmotor nach Anspruch 7, wobei der Gasmotor eine Motordrehzahl hat, die im Bereich von 200 bis 1500 U/min liegt.

9. Gasmotor nach Anspruch 7 oder 8, wobei der Gasmotor ein Reihenmotor oder ein V-Motor ist und eine Zylinderzahl von 4 bis 16 hat.

10. Gasmotor nach einem der Ansprüche 7 bis 9, wobei das Verdichtungsverhältnis des Gasmotors zwischen 8:1 und 12:1 liegt.

## Revendications

1. Procédé de fonctionnement d'un moteur à combustion interne, le procédé comprenant la fourniture d'un mélange de carburant comprenant du CO₂, du méthane et au moins 25 % en volume d'hydrogène dans une chambre de combustion du moteur à combustion interne, le CO₂ et le méthane provenant de biogaz, dans lequel le procédé comprend en outre la mesure de la teneur en CO₂ du biogaz et l'ajustement de la proportion de l'hydrogène dans le mélange de carburant sur la base de la teneur en CO₂ avant la fourniture du mélange de carburant dans la chambre de combustion, de telle sorte qu'avec une teneur en CO₂ plus élevée, une proportion d'hydrogène plus élevée est utilisée.

2. Procédé selon l'une quelconque de la revendication 1, dans lequel le mélange de carburant comprend au plus 15 % en volume de CO₂.

3. Procédé selon la revendication 1 ou 2, dans lequel le mélange de carburant comprend
- de 25 à 98 % en volume d'hydrogène et/ou
- de 1 à 15 % en volume de CO₂ et/ou
- de 1 à 50 % en volume de méthane.

4. Procédé selon l'une quelconque des revendications précédentes, dans lequel le moteur à combustion interne est utilisé pour entraîner un véhicule ou dans lequel le moteur à combustion interne est utilisé en tant que moteur stationnaire.

5. Procédé selon l'une quelconque des revendications précédentes, dans lequel le moteur à combustion interne a un régime moteur allant de 200 à 1 500 tr/min.

6. Procédé selon l'une quelconque des revendications précédentes, dans lequel le procédé est destiné à atténuer le cliquetis de pré-allumage dans un moteur à gaz utilisant du carburant hydrogène.

7. Moteur à gaz, le moteur à gaz étant agencé pour être entraîné par un mélange de carburant comprenant du CO₂, du méthane et au moins 25 % en volume d'hydrogène, le CO₂ et le méthane provenant de biogaz, dans lequel le moteur à gaz comprend des moyens permettant de mesurer la teneur en CO₂ du biogaz et des moyens permettant d'ajuster la proportion d'hydrogène dans le mélange de carburant sur la base de la teneur en CO₂ avant la fourniture du mélange de carburant dans une chambre de combustion.

8. Moteur à gaz selon la revendication 7, dans lequel le moteur à gaz a un régime moteur allant de 200 à 1 500 tr/min.

9. Moteur à gaz selon la revendication 7 ou 8, dans lequel le moteur à gaz est un moteur en ligne ou un moteur en V et a un nombre de cylindres de 4 à 16.

10. Moteur à gaz selon l'une quelconque des revendications 7 à 9, dans lequel le taux de compression du moteur à gaz est de 8:1 à 12:1.
